# EUROPÄISCHE PATENTSCHRIFT

(11) **EP 2 648 390 B1**
(45) Veröffentlichungstag und Bekanntmachung des Hinweises auf die Patenterteilung: **08.03.2017**
(21) Anmeldenummer: 12163090.9
(22) Anmeldetag: 04.04.2012
(51) Int. Cl.: H04L 29/08

(54) **Entfernte Steuerung einer diagnostischen Darstellungseinrichtung über Remote-Desktop Verbindungen**
Remote management of a diagnostic imaging device by means of remote desktop connections
Commande à distance d'une installation de représentation diagnostique via des connexions de bureau distant

(43) Veröffentlichungstag der Anmeldung: 09.10.2013
(73) Patentinhaber: Siemens Healthcare GmbH, 91052 Erlangen (DE)
(72) Erfinder: Bertsch, Rüdiger, 91052 Erlangen (DE); Friese, Thomas, 81671 München (DE); Ukis, Vladyslav, 90489 Nürnberg (DE)

(56) Entgegenhaltungen:
- WO-A1-2011/127991
- US-A1- 2008 244 081
- Jarmo Reponen: , 1. Januar 2010 (2010-01-01), XP002680515, U N I V E R S I TAT I S O U L U E N S I S Gefunden im Internet: URL:http://herkules.oulu.fi/isbn9789514263 729/isbn9789514263729.pdf [gefunden am 2012-07-19]

## Beschreibung

Die vorliegende Erfindung liegt auf den Gebieten der Medizintechnik und der Informationstechnologie und betrifft insbesondere das Steuern einer Darstellungseinrichtung zur Darstellung von radiologischen Bildern von einer entfernten Client/Server-basierten Applikation, die über eine Remote-Desktop-Verbindung an die (entfernte) Darstellungseinrichtung angeschlossen ist.

Bei der informationstechnologischen Konzipierung und Implementierung von radiologischen Befundungsumgebungen ist es von besonderer Bedeutung sicherzustellen, dass die zu befundenden Bilddaten in ausreichender Qualität dargestellt werden, um eine medizinische Beurteilung zu ermöglichen und um Fehldiagnosen und falsche Einschätzungen zu vermeiden, indem beispielsweise wichtige Bildmerkmale nicht übersehen werden können. Dazu ist es zum einen notwendig, ausgewählte Hardware zu verwenden, um die Voraussetzungen für das Gebiet der Medizintechnik zu erfüllen. Zum anderen ist es erforderlich, das Softwaresystem an die Darstellungserfordernisse anzupassen.

Insbesondere im klinischen Umfeld, aber auch bei Systemen von niedergelassenen Ärzten ist es heute im Stand der Technik üblich, Client-Server-Systeme zu verwenden, um die Bilddaten für die diagnostische Anwendung bzw. Darstellung vorzubereiten und/oder zu übertragen bzw. entsprechend zu verarbeiten. Dazu sind Client-Server-basierte Applikationen auf lokalen Befundungsworkstations implementiert, die zum Zwecke der Steuerung und/oder des Datenaustauschs zu einem hohen Grad von den verfügbaren lokalen Netzwerkbedingungen abhängig sind. Um den Einsatz zu flexibilisieren ist es häufig gewünscht, einen Befundungsarbeitsplatz auf einem entfernten Viewer zu installieren, der von der Server-basierten Applikationen gesteuert wird. Der Datenaustausch zwischen der Applikation (mit der Befundungssoftware bzw. auch mit der Befundungshardware) und dem jeweiligen Viewer (mit der Darstellungseinrichtung/Monnitor) stehen über Netzwerkverbindungen in Datenaustausch.

Um Desktop-Clients von entfernten Applikationen (Servern) zu steuern, hat Microsoft ein proprietäres Netzwerkprotokoll entwickelt, um Terminaldienste anzubieten. Das Remote-Desktop-Protokoll (RDP) basiert auf TCP-IP (also auf der Transport- und Internetschicht des ISO/OSI-Schichtenmodells). Dabei ist es vorgesehen, dass ein Server (in der Regel als "Terminalserver" bezeichnet) Bildschirminhalte generiert, die dann auf dem entfernten (remote) Terminal-Client zur Anzeige gebracht werden sollen. Umgekehrt werden Benutzerinteraktionseingaben (z.B. in Form von Maus- und/oder Tastatureingaben) vom Terminal-Client über das RDP-Protokoll an den Server übermittelt. Der Client kann somit von der Ferne und somit auch zentral, nämlich vom Server, verwaltet und gesteuert werden. Neben der Darstellung von Bildschirminhalten ist es auch möglich, akustische Signale zum Client zu übertragen. Die neueren Betriebssysteme von Microsoft, wie z.B. Windows XP, Windows Server 2003, Windows Vista unterstützen den RDP-Dienst, sowie das ICA-Protokoll (ICA: Independent Computing Architecture, Citrix). Der RDP-Dienst kann jedoch auch für andere Betriebssysteme verwendet werden, beispielsweise auch in Linux-Umgebungen, Free-BSD und für Mac-basierte Betriebssysteme. Das RDP-Protokoll zeigt jedoch eine schlechte Performance, da es nicht für graphikintensive, hoch interaktive Applikationen ausgelegt ist. Im Stand der Technik bekannte Alternativen dazu sind PC-over-IP Verbindungen (z.B. Teradici oder XenApp (Citrix)).

Das Dokument "Teleradiology - Changing Radiological Service Processes from local to Regional, International and Mobile Environment", Autor Jarmo Reponen, Universität OULU, 1.1.2010 offenbart eine Anordnung zur Erstellung und Übertragung von Patientendaten in Form von Text, Bildern und Videos und zur Darstellung dieser Daten auf einem entfernten Terminal.

Das Dokument WO 2001/127991 "Method of Transmission of Visual Content" offenbart ein System zur Übertragung von Bilddaten (z.B. medizinischen Daten) mit dynamischer, an die Art der Daten angepasster Übertragungsrate.

Die im Stand der Technik bekannten schnellen LAN-Verbindungen (LAN: Local Area Network, wie z.B. RDP-Protokolle) können jedoch nicht auf einer langsameren WAN-Verbindung (WAN: Wide Area Network) realisiert werden. Deshalb ist es für das Gebiet der bildverarbeitenden Medizintechnik nur unter Qualitätseinbußen, eingeschränkt oder gar nicht möglich, Client
und Server zu trennen, so dass der Datenaustausch über ein langsames WAN abgewickelt werden müsste.

In der Regel basieren die meisten Mechanismen zur schnellen Datenübertragung darauf, das Volumen der zu übertragenden Daten möglichst gering zu halten, um das Netzwerk möglichst wenig zu belasten. Dabei werden in der Regel verlustbehaftete Kompressionsalgorithmen angewendet oder die zu übertragenden Bilddaten werden anderweitig modifiziert (z.B. durch Verringerung der Frame-Rate-Rate). Dies hat auf dem Gebiet der bildverarbeitenden Medizintechnik zur Folge, dass die Bilddaten nach der Übertragung mitunter nicht mehr in der erforderlichen Qualität auf dem Viewer angezeigt werden können. Diese dynamischen, Netzwerk-basierten Manipulationen an den Daten kompromittieren die diagnostische Qualität der Daten, so dass eine Darstellung der Befundungsdaten auf dem entfernten Viewer in der erforderlichen Bildqualität nicht sichergestellt werden kann.

Diese Entwicklung schränkt jedoch die Anwendung von verteilten Systemen auf dem Gebiet der Medizintechnik ein.

Im medizinischen Umfeld ist es insbesondere für die Befundung wünschenswert, eine Lösung bereitzustellen, mit der ein Client/Server-System auch für entfernt installierte Viewer zur Darstellung und Manipulation von medizinischen Bilddaten die Qualität der übertragenen Daten überprüfen und sicherstellen kann. Des Weiteren soll eine Applikation auf dem Client/Server-System über die Qualität der auf dem Viewer empfangenen Daten informiert und gezielt und flexibel darauf reagieren können.

Die vorliegende Erfindung hat sich deshalb zur Aufgabe gestellt, eine Client-Server-basierte Infrastruktur für medizinische Befundungssysteme mit einem entfernt installierten Viewer (remote viewer) zu verbessern, die die Nachteile des Standes der Technik überwindet und einen insbesondere hinsichtlich der Qualität der übertragenen Daten verbesserten Mechanismus bereitstellt.

Diese Aufgabe wird durch die beiliegenden nebengeordneten Patentansprüche gelöst, insbesondere durch ein Verfahren zur entfernten Steuerung eines Viewers, durch ein Client-Server-basiertes Remote-Viewer-System und durch ein Computerprogrammprodukt.

Im Folgenden wird die Erfindung im Bezug auf das Verfahren beschrieben. Hierbei erwähnte Vorteilte, Merkmale und alternative Ausführungsformen sind ebenso auch auf die anderen beanspruchten Gegenstände (das System und das Produkt) zu übertragen und umgekehrt. Dabei sind die funktionalen Merkmale und/oder die Verfahrensschritte durch entsprechende Hardwaremodule ausgebildet, die zur Übernahme der jeweiligen Funktionalität bestimmt sind. Beispielsweise wird das Versenden durch ein Versendemodul ausgebildet. Die Hardwaremodule können als Mikroprozessorbauteile in einen Chip integriert sein.

Gemäß einem Aspekt bezieht sich die Erfindung auf ein Verfahren zur entfernten Steuerung eines Viewers, der zur Darstellung von medizinischen Bildern bzw. einer Folge von medizinischen Bildern dient, wobei der Viewer durch eine Applikation gesteuert wird, die auf einem entfernten Server oder einer sonstigen computer-basierten Instanz implementiert ist. Der Viewer und der Server stehen über eine Remote-Desktop-Protokoll-Netzwerkverbindung mittelbar in Datenaustausch. "Mittelbar" deshalb, da der Datenaustausch zwischen Viewer und Server über einen Agenten vermittelt wird. Der Agent steht über einem RVIC-Kanal in Datenaustausch mit der Applikation. Des Weiteren steht der Agent ebenfalls über den RVIC-Kanal in Datenaustausch mit dem Viewer. Darüber hinaus ist ein weiterer Kommunikationskanal zwischen Agent und Viewer vorgesehen. Dies wird über eine Remote-Desktop-Protokoll-Verbindung (kurz: RDP-Netzwerkverbindung) implementiert. Das Verfahren umfasst folgende Schritte:
- seitens der Applikation: Erzeugen einer Bildfolge zur Darstellung auf dem (entfernten) Viewer, Erzeugen eines die Bildfolge identifizierenden Identifikators und/oder Erzeugen eines Übertragungsindikators und Versenden der Bildfolge mit dem Identifikator und/oder dem Übertragungsindikator an den Agenten;
- Seitens des Agenten: Empfang der Bildfolge, des Identifikators und/oder des Übertragungsindikators und Analyse des empfangenen Übertragungsindikators zum Erzeugen einer modifizierten Bildfolge in Abhängigkeit von dem Übertragungsindikator;
- Versenden der modifizierten Bildfolge mit dem Identifikator von dem Agenten an den Viewer über die RDP-Netzwerkverbindung;
- Zusätzliches (insbesondere paralleles) Versenden des Identifikators als Referenzgröße (Referenz-Identifikator) über den RVIC-Kanal an den Viewer;
- Seitens des Viewers: Empfang der modifizierten Bildfolge mit dem Identifikator über die RDP-Verbindung und Empfang des Referenz-Identifikators über den RVIC-Kanal und Vergleich der beiden empfangenen Identifikatoren auf Übereinstimmung;
- Darstellen der Bildfolge auf dem Viewer.

Im Folgenden werden die Begrifflichkeiten näher erläutert, die im Rahmen dieser Anmeldung verwendet werden.

Der Viewer ist eine Software, die zur Darstellung von medizinischen Bildern auf einer Darstellungseinrichtung (z.B. Monitor) dient. Dabei ist die Akquisitionsmodalität zur Akquisition der jeweiligen Bilder von nachrangiger Bedeutung. Es kann sich hier beispielsweise um Computertomographen, herkömmliche Röntgengeräte, MRT-Anlagen, Ultraschallgeräte, Positions-Emmissions-Tomographen etc. handeln. Entweder kann es sich um eine zeitliche Abfolge von Bildern oder Frames handeln. Unter Umständen kann es sich auch um eine Video- oder Filmsequenz handeln (z.B. bei Ultraschallbildern). Ebenso ist es möglich, CT- und/oder MR-Bilder als Bildstapel oder Bildsequenz einzulesen. Dabei ist es für die Befundung wichtig, dass kein Bild aus dem Bilderstapel übersprungen wird. Ebenso darf die Reihenfolge der akquirierten Bilder nicht verändert werden, da die Reihenfolge unter Umständen relevant für eine Befundung ist. Je nach Ausführungsform kann es sich um zweidimensionale, dreidimensionale oder höherdimensionale Bilder handeln.

Die RDP-Verbindung ist eine Remote-Desktop-Protokoll-Netzwerkverbindung, die auf den im Stand der Technik bekannten Prinzipien zum Betrieb und zur Steuerung eines entfernten Viewers basiert. In einer bevorzugten Ausführungsform basiert die Implementierung auf einer Windows-basierten Technologie. Alternative Ausführungsbeispiele sehen hier jedoch andere Betriebssysteme vor.

Bei dem Agenten kann es sich um einen eigenen Computer handeln, der mit entsprechender Software ausgebildet ist. Darüber hinaus kann der Agent auch nur ein Softwaremodul sein, das Client-Server-seitig implementiert ist und erfindungsgemäß erweitert wird durch Bereitstellen einer Datenübertragungs-/Komprimierungsfunktionalität, einer Qualitätsüberwachungsfunktionalität und einer Bestätgigungssignalüberwachungsfunktionalität.

Der RVIC-Kanal ist ein separater Kommunikationskanal, der zusätzlich zur RDP-Verbindung bereitgestellt wird. Er dient zur Aufrechterhaltung der Integrität der zu transferierenden Datenobjekte. Gemäß einer ersten Ausführungsform wird für den RVIC-Kanal dieselbe physikalische Verbindung genutzt, wie für die RDP-Verbindung. Im diesem Fall kann ein zusätzlicher logischer Kanal verwendet werden, um die entsprechenden Datensätze (Referenzgrößen) getrennt zu übertragen. Gemäß einem zweiten Aspekt kann hier ein anderer physikalischer Kanal zum Datenaustausch verwendet werden (z.B. Mobilfunk, UMTS, oder andere Datenübertragungsprotokolle).

Die modifizierte Bildfolge, die von dem Agenten in Abhängigkeit von dem empfangenen Übertragungsindikator erzeugt wird, unterscheidet sich von der (originalen) Bildfolge durch zeitlich variable Kompressionseigenschaften der Übertragungsprotokolle, die von der verfügbaren Netzwerkbandbreite zwischen Viewer und Server abhängen. Der Übertragungsindikator umfasst einen Hinweis darauf, in welcher Qualität der zu übertragende Datensatz an den Viewer transferiert werden soll. Muss beispielsweise eine sehr hohe Qualität bereitgestellt werden, so kann keine oder nur eine geringe Kompression (eine verlustfreie) Kompression angewendet werden. Bei anderen Befundungsaufgaben, die in geringerer Qualität ausführbar sind (z.B. reine Segmentierungsaufgaben) kann die Bildfolge komprimiert übertragen werden.

Grundsätzlich kann der Übertragungsindikator somit einen Hinweis auf die Qualität bzw. auf die Qualitätsanforderungen umfassen. Der Übertragungsindikator kann sich dabei entweder direkt auf ein Bild der Bildfolge beziehen oder er kann auch auf mehrere Bilder der Bildfolge bezogen sein (z.B. die ersten 10 Bilder des Bildstacks).

In einer alternativen Ausführungsform ist es möglich, dass der Übertragungsindikator sich nur auf einen Bildausschnitt eines Bildes der Bildfolge bezieht und z.B. kennzeichnet, dass die radiologischen Bildinhalte mit höchster Qualität und die Icons, Menüpunkte, Fensterrahmen etc. in dem jeweiligen Bild in geringerer Qualität übertragen werden sollen, da letztere für die Befundung nur eine untergeordnete Relevanz haben. Damit kennzeichnet der Übertragungsindikator, ob das jeweilige Bild für die Befundung relevant ist und mit hoher Qualität zu übertragen ist. Die Bildinhalte müssen grundsätzlich in hoher Qualität übertragen werden, da sie relevant für die Befundung sind, während Bildschirmoberflächenelemente, wie z.B. Icons, Fensterumrahmungen, Hinweisfelder etc. von geringerer Bedeutung sind und deshalb in geringerer Qualität auf dem Viewer dargestellt werden können. Weitere Einstellungen können vorteilhafterweise im Vorfeld konfiguriert werden.

Gemäß einer vorteilhaften Ausführungsform kennzeichnet der Übertragungsindikator somit, welche Kompressionsparameter bei der Datenübertragung von Agent zu Viewer zu berücksichtigen sind. Ebenso können Qualitätsvorgaben umgesetzt werden, die wiederum Einfluss auf die Datenübertragung und/oder Komprimierung der Bildfolge haben. Darüber hinaus gibt der Übertragungsindikator an, ob eine verlustbehaftete oder verlustfreie Kompression und/oder welches Kompressionsverfahren bei der Datenübertragung anzuwenden ist.

Gemäß einem weiteren Aspekt wird der Übertragungsindikator dynamisch und/oder in Abhängigkeit von einer verfügbaren Netzwerkbandbreite (zwischen Agent und Viewer) und/oder in Abhängigkeit von der aktuellen Netzwerkauslastung bestimmt. Damit kann die radiologische Befundung auf dem entfernten Viewer sehr zielgerichtet auf die aktuellen Erfordernisse des Netzwerkes ausgelegt sein, um gleichzeitig die Befundung in optimaler Qualität sicher zu stellen.

Gemäß der bevorzugten Ausführungsform wird von der Applikation neben der Bildfolge und dem Übertragungsindikator noch ein Identifikator an den Agenten übertragen. Der Identifikator dient zur Identifizierung der Bildfolge. Der Identifikator wird übertragen, um die Fehlerfreiheit der an den Viewer übertragenen Daten zu validieren. Gemäß einer ersten Ausführungsform identifiziert der Identifikator die Bildfolge als Ganzes. Alternativ ist es möglich, dass der Identifikator eine Folge von Sub-Identifikatoren umfasst, wobei jeder Sub-Identifikator einzelne Bilder der Bildfolge identifiziert. Damit wird es möglich, bei Übertragung des Identifikators an den Viewer, auf dem Viewer zu überprüfen, ob die empfangene Bildfolge in der ausreichenden Qualität (z.B. in ausreichender Frame-Rate) in der vorgesehenen Reihenfolge und/oder innerhalb des vorgesehenen Zeitraums übertragen worden ist. Dazu erstellt der Agent neben dem Identifikator eine Kopie des Identifikators, der als Referenz-Identifikator dient und über einen anderen Kanal, insbesondere über den RVIC-Kanal an den Viewer übertragen wird. Der Viewer empfängt dann die beiden Identifikatoren - also den originalen Identifikator - der vorzugsweise gemeinsam mit der Bildfolge (z.B. als Datenpaket) über die RDP-Verbindung übertragen wird und den Referenz-Identifikator, der über die RVIC-Verbindung übertragen wird und kann so feststellen, ob die empfangene Bildfolge auch in der originalen und geforderten Abfolge/Qualität angekommen ist.

Gemäß einer bevorzugten Ausführungsform der Erfindung kann der Identifikator als sichtbares oder unsichtbares digitales Wasserzeichen der jeweiligen Bildfolge zugeordnet sein. Das Wasserzeichen umfasst einen systeminternen eineindeutigen Kennzeichnungssatz zu dem jeweils aktuellen und als für die Befundung relevant selektierten Bildes der Bildfolge. Alternativ kann der Identifikator auch in die Bildfolge eingebettet sein, beispielsweise in die Metadaten (z.B. in einen DICOM-Headerdatensatz) oder in JPEG-Attribute.

In einer alternativen Ausbildung der Erfindung ist es möglich, nur einen der beiden Datensätze (Identifikator oder Übertragungsindikator) zu übertragen und zur Adaption der Bildfolge zu verwenden. In einer ebenfalls bevorzugten Ausführungsform kann der Identifikator mit dem Übertragungsindikator zu einem Datensatz verschmolzen werden. In diesem Fall identifiziert der Datensatz die Bildfolge (bzw. einzelne Bilder der Bildfolge) und dient gleichzeitig dazu, festzulegen, welche Bilder der Bildfolge relevant sind (und in hoher Qualität zu übertragen sind) und welche nicht. Somit handelt es sich um einen Identifikator-Übertragungsindikator-Datensatz.

Wesentlich ist es, dass ein Anwender auf dem Viewer auch Benutzerinteraktionen im Rahmen der Befundung ausführen kann. Dabei sind alle üblichen und bekannten Eingabeformate vorgesehen. So kann der Nutzer beispielsweise Eingaben mit der Maus (bewegen und anklicken), mit der Tastatur und/oder über eine sprachgesteuerte Benutzerführung tätigen. Dafür ist auf dem Viewer ein User Interface installiert, um die entsprechenden Signale zu erfassen und über die RDP-Verbindung mittels des Agenten an den Server bzw. an die Steuerungsapplikation zu übertragen. Nachdem die Applikation das Signal bzw. die die Benutzerinteraktion repräsentierende Signalfolge empfangen hat, wird von der Applikation geprüft, ob ein neuer Darstellungsinhalt, also eine neue oder geänderte Bildfolge erzeugt werden muss. Grundsätzlich führt jede User-Interaktion zu einem neuen Frame. Damit hat jede Interaktion auf dem Viewer einen Einfluss auf die darzustellenden Bildinhalte bzw. auf den Inhalt der nachfolgenden Frames, die seitens der Applikation generiert werden müssen.

Wesentlich ist, dass erfindungsgemäß sichergestellt werden kann, dass der remote Viewer selbstständig erkennen kann, ob die Bildfolge in der von der Applikation vorgesehenen Qualität und in der vorgesehenen Sequenz auf dem Viewer angekommen ist. Vorzugsweise erfolgt dies durch Vergleich des originalen Identifikators mit dem Referenz-Identifikator. Bei Übereinstimmung kann ein Bestätigungssignal (seitens des Viewers) erzeugt werden. Wahlweise kann das Bestätigungssignal unmittelbar auf dem Viewer zur Anzeige gebracht werden und/oder das Bestätigungssignal kann an weitere computer-basierte Instanzen übertragen werden, beispielsweise - vermittelt durch den Agenten - an die Applikation auf dem Server, um diese zu informieren, dass die erzeugte Bildfolge auch fehlerfrei auf dem Viewer angekommen ist. Da in der Praxis in der Regel hohe Datenraten vorgesehen sind, führt das Bestätigungssignal dann zu einer möglichst ununterbrochenen Anzeige (z.B. grünes Signal). Alternativ ist es möglich, nur dann eine Anzeige zu veranlassen, falls das Bestätigungssignal nicht erzeugt werden konnte (als Warnsignal). Hier ist beispielsweise das Einblenden von Warnhinweisen möglich, um darüber zu informieren, dass ein Fehler aufgetreten ist, oder die von der Applikation vorgesehenen Qualitäts- und Übertragungseigenschaften nicht eingehalten werden konnten.

Zur Darstellung des Bestätigungssignals und/oder von Warnhinweisen kann eine spezifische, vorkonfigurierbare Region auf dem Userinterface reserviert werden, in der dann bedarfsweise eine entsprechende Meldung durch den Remote-Viewer eingeblendet wird.

Gemäß einem Aspekt der Erfindung ist es vorgesehen, dass das Bestätigungssignal von dem Viewer über den RVIC-Kanal an die Applikation (vermittelt über den Agenten) übertragen wird. Damit kann sichergestellt werden, dass eine andere (logische) Verbindung als die RDP-Verwendung zur Datenübertragung des Bestätigungssignals verwendet wird.

In einer Weiterbildung der Erfindung ist es vorgesehen, dass das Bestätigungssignal einen Frame-Drop-Datensatz umfasst, aus dem zumindest eine Frame-Drop-Rate berechnet werden kann. Dabei ist es vorgesehen, dass der Identifikator jeweils einen Frame bzw. ein Bild der Bildsequenz identifiziert. Damit wird jedes Bild der Bildfolge indiziert bzw. referenziert und es kann auf dem Viewer überprüft werden, ob die empfangene Abfolge mit der vorgesehenen Abfolge übereinstimmt, indem der originale Identifikator mit dem Referenz-Identifikator auf Übereinstimmung verglichen wird. Der Referenz-Identifikator ist eine Kopie des Identifikators, der wiederum ein Bild der Bildsequenz identifiziert und über den RVIC-Kanal an den Viewer übertragen wird. Sobald ein Referenz-Identifikator keine Entsprechung in einem Identifikator hat, kann der Viewer davon ausgehen, dass es sich um einen Frame-Drop handelt, dass also das entsprechende Bild aufgrund von Übertragungsverlusten verloren gegangen ist. Die Applikation kann im Vorfeld definieren, welche Frame-Drop-Rate als maximaler Schwellenwert bei der Datenübertragung akzeptiert wird. Sobald die auf dem Viewer empfangene Datenrate unter den Schwellenwert sinkt, wird ein Warnsignal ausgegeben, das bedarfsweise an andere Instanzen (z.B. Systemadministratoren) weitergeleitet werden kann. Darüber hinaus können die ausgewerteten Signale (Frame-Rate, Frame-Drop-Rate, Bestätigungssignal, Warnhinweis etc.) auch zum Zwecke von statistischen Berechnungen und Auswertungen verwendet und/oder gespeichert werden.

Eine weitere vorteilhafte Ausführungsform der Erfindung bezieht sich darauf, dass alle oder ausgewählte Benutzereingaben seitens des Viewers und/oder alle oder ausgewählte Bildfolgen und/oder Identifikatoren, die seitens der Applikation erzeugt werden, mit einem Zeitstempel versehen sind. Durch die Auswertung der Zeitstempel von Nutzereingaben (die wiederum eine Änderung der Bildschirmdarstellung verursachen) und/oder der Bildfolgen kann die Applikation messen, welche End-to-End-Update-Performance des Systems vorliegt bzw. welche Latenzzeiten zur Ausführung von Bildschirminhaltsänderungen bestehen, um eine unzureichende Performance zu identifizieren, beispielsweise wenn Ultraschallfilme einem Streaming unterzogen werden müssen.

Durch die Wahl bzw. Einstellung des Übertragungsindikators und/oder des Identifikators ist es möglich, die Darstellung der zu befundenden Bilddaten auf einem entfernten Viewer an die aktuell verfügbaren Netzwerkbedingungen zwischen Viewer und steuernder Applikation anzupassen. So können beispielsweise zwei Anwendungsszenarien bestimmt werden:
1. Eine direkte Synchronisation zwischen Applikation und Viewer. Dabei geht üblicherweise eine hohe Darstellungsqualität zu Lasten einer Übertragungsrate (Frame-Rate).
2. Automatisches Erkennen unzureichender Darstellungsqualität auf dem Viewer und automatisches Generieren von Warnmeldungen auf einer graphischen Oberfläche auf dem Viewer. Dies hat den Vorteil, dass der Arzt, der an dem Viewer arbeitet, unmittelbar darüber informiert wird, dass die von ihm gesichteten Daten nur in nicht ausreichender Qualität verfügbar sind. Damit wird er in die Lage gesetzt, weitere Schritte anzustoßen (oder auf eine verbesserte Datenübertragung zu warten).

Gemäß einem Aspekt der Erfindung bezieht sich der Übertragungsindikator auf ein vollständiges Bild der Bildfolge. Damit wird der Agent darüber informiert, welche Anforderungsbedingungen zur Übertragung des jeweiligen Bildes (hohe Qualität, niedrige Qualität, hohe/niedrige Kompression) erfüllt sein müssen. In einer Weiterbildung der Erfindung kann der Übertragungsindikator differenzierter ausgebildet sein und sich auf einzelne Ausschnitte eines Bildes der Bildfolge beziehen. Damit wird es möglich, zu differenzieren, welche Teile eines Bildes diagnoserelevant sind und welche nicht. Beispielsweise können Menüs, Buttons, Informationsfenster, die Darstellung von Werkzeugen etc. als nicht diagnoserelevant indiziert werden (und damit hochkomprimiert werden), während Bildinhalte grundsätzlich in ausreichender diagnostischer Qualität (lossless compression) übertragen werden müssen.

Alternativ zur vorstehend beschriebenen Ausführungsform, bei der sich der Übertragungsindikator auf einzelne Bildausschnitte des Bildes einer Bildfolge bezieht, ist es ebenso möglich, dass die Applikation bestimmte Bildschirmbereiche vordefiniert, in denen diagnoserelevante Daten angezeigt werden müssen (z.B. in einem Fenster bestimmter Größe). Dieser Bereich wird dann entsprechend als relevant indiziert und dem Agenten übermittelt.

Im Allgemeinen werden alle Userinputs an die Applikation weitergeleitet und dort ausgewertet bzw. zur Darstellung von neuen Bildschirminhalten umgesetzt. Der Viewer und der Agent übermitteln dabei lediglich die Signale der Eingabegeräte (wie beispielsweise Maus, Tastatur etc.). Damit entsteht der Vorteil, dass der entfernte Viewer vollständig autark über die empfangene Bildqualität entscheiden kann und, dass der Viewer vollständig von der entfernten Applikation gesteuert werden kann.

Gemäß einem Aspekt wird die modifizierte Bildfolge auf dem Viewer empfangen und angezeigt. Vorzugsweise ist es vorgesehen, dass der Viewer über ein zusätzliches Modul (z.B. eine Dekompressionseinheit) verfügt, um einen komprimierten Datenstrom, der gemäß den Vorgaben des Übertragungsindikators als modifizierte Bildfolge erzeugt wurde, wieder zu dekomprimieren und den dann dekomprimierten Inhalt darzustellen. Es kann somit - je nach Konfiguration des Systems - sowohl die Bildfolge als auch die modifizierte Bildfolge auf dem Viewer durch den Viewer zur Darstellung gebracht werden.

Eine weitere Lösung der vorstehend genannten Aufgabe besteht in einem Remote-Viewer-System, das über eine entfernte Applikation gesteuert wird. Es umfasst:
- einen Viewer zur Darstellung von medizinischen Bildinhalten bzw. Bildfolgen,
- einen Agenten, der den Datenaustausch zwischen Viewer und Applikation vermittelt und der in der Umgebung des Servers implementiert ist,
- Eine RDP-Verbindung zwischen Viewer und Agent,
- einen RVIC-Kanal, der zusätzlich zur RDP-Verbindung zwischen Viewer und Agent bereitgestellt ist und über den auch der Agent mit der Applikation interagiert,
- einen Bildgenerator, der auf dem Server ausgebildet ist und dazu dient, die Bildfolge zu erzeugen, die auf dem entfernten Viewer dargestellt werden soll und die Nutzersignale umzusetzen, die auf dem entfernten Viewer eingegeben worden sind. Darüber hinaus dient der Bildgenerator zum Erzeugen eines Identifikator und/oder eines Übertragungsindikators. Der Bildgenerator versendet die Bildfolge mit dem Identifikator und/oder dem Übertragungsindikator an den Agenten;
- Ein Übertragungsmodul, das auf dem Agenten implementiert ist und dazu dient, den empfangenen Übertragungsindikator zu analysieren, um darauf aufbauend eine modifizierte Bildfolge zu erzeugen. Der Übertragungsindikator zeigt an, mit welcher Kompression bzw. in welcher Qualität das Bild jeweils übertragen werden muss;
- Ein Versendemodul, das ebenfalls auf dem Agenten installiert ist und zum Versenden der modifizierten Bildfolge mit dem Identifikator an den Viewer über die RDP-Verbindung bestimmt ist und der darüber hinaus zum Versenden des Identifikators über den RVIC-Kanal bestimmt ist. Die Versendung des Identifikators über den RVIC-Kanal dient dazu, einen Referenz- bzw. Vergleichsidentifikator bereitstellen zu können;
- Ein Empfangsmodul, das auf dem Viewer installiert ist und dazu dient, die modifizierte Bildfolge auf dem Viewer zu empfangen. Darüber hinaus werden der Identifikator und der Referenz-Identifikator (über die beiden unterschiedlichen Verbindungen) empfangen und auf Übereinstimmung verglichen. Bei Übereinstimmung kann ein den Erfolgsfall signalisierendes Bestätigungssignal erzeugt werden, das über den RVIC-Kanal und gemittelt über den Agenten an die Applikation gesendet wird. Anschließend kann die modifizierte Bildfolge (insbesondere nach einer Dekomprimierung) auf dem Viewer dargestellt werden.

Bildgenerator, Übertragungsmodul, Versendemodul und Empfangsmodul sind bevorzugt computer-implementierte Module, die etwa als Softwarecode oder als Hardwareimplementierung bereitgestellt werden können und die Applikation, den Agenten und den Viewer in seiner Funktionalität erweitern.

Die Erfindung erweitert insbesondere den Agenten durch das Übertragungs- und Versendemodul. Damit erweitert die Erfindung den Agenten um die Fähigkeit, mit der Applikation (die vorzugsweise auf einem Client in der Client/Server-Umgebung installiert ist) die zur (Qualitäts-)Sicherung der Datenübertragung notwendigen Informationen auszutauschen (z.B. welche Regionen im Bild komprimiert werden dürfen und welche nicht und wenn ja, dann mit welcher Kompressionsart, Reihenfolgeinformationen in Bezug auf die Bildfolge, Koordinaten zur Anzeige des Warnindikators durch den Viewer). Des Weiteren wird es ermöglicht, eine korrekte Darstellung (und damit auch korrekte Übermittlung) eines Bildinhaltes auf dem Viewer (durch Empfang des Bestätigungssignals) zu quittieren. Damit kann auch die medizinische Applikationen auf dem entfernt stehenden Client-Server System korrekt reagieren und z.B. die Erzeugung des nächsten Frames so lange aussetzen bis der jeweils relevante Vorgänger übertragen und korrekt dargestellt wurde.

Des Weiteren erweitert die Erfindung den Viewer um ein Empfangsmodul. Damit wird auf dem Viewer eine weitere Funktionalität bereitgestellt, nämlich dahingehend unter Zuhilfenahme zusätzlicher, vom Agent übermittelter Informationen zu prüfen, ob die dargestellten Bilder in der von der Applikation geforderten Qualität empfangen und darstellbar sind und das Ergebnis der Prüfung anzuzeigen (e.g. Warnsignal generieren, wenn zu hohe Komprimierung vorliegt, Frame Drop). Wesentlich ist, dass der Viewer diese Überprüfung vollständig separat und eigenständig (d.h. unabhängig von der Applikation) ausführen kann.

Die dafür zusätzlich notwendige Signalisierung zwischen dem Viewer und dem Agent wird erfindungsgemäß über einen zusätzlichen Informationskanal RVIC realisiert, dieser kann auch logisch in die existierende Remote-Desktop-Verbindung eingebettet werden.

Gemäß einem Aspekt ist die Applikation als Client-Server-Applikation ausgebildet. Demnach kann der Bildgenerator als Client des Servers ausgebildet sein.

Eine weitere Aufgabenlösung bezieht sich auf ein Computerprogrammprodukt. Alternativ ist es ebenso möglich, ein Computerprogramm bereitzustellen, das auch auf einem tragbaren Speichermedium gespeichert sein kann. Das Computerprogramm kann dabei verteilt realisiert werden, so dass es teilweise auf dem Viewer und/oder teilweise auf dem Server (Applikation und/oder Agent) implementiert sein kann.

Im Folgenden wird die Erfindung näher anhand von Ausführungsbeispielen unter Bezugnahme auf die Figuren näher erläutert. In dieser zeigen:
- Figur 1: eine schematische Darstellung des erfindungsgemäßen Systems gemäß einer bevorzugten Ausführungsform der Erfindung,
- Figur 2: eine schematische, detailliertere Darstellung gemäß eines Ausführungsbeispiels der Erfindung und
- Figur 3: ein Ablaufdiagramm anhand eines Ausführungsbeispiels.

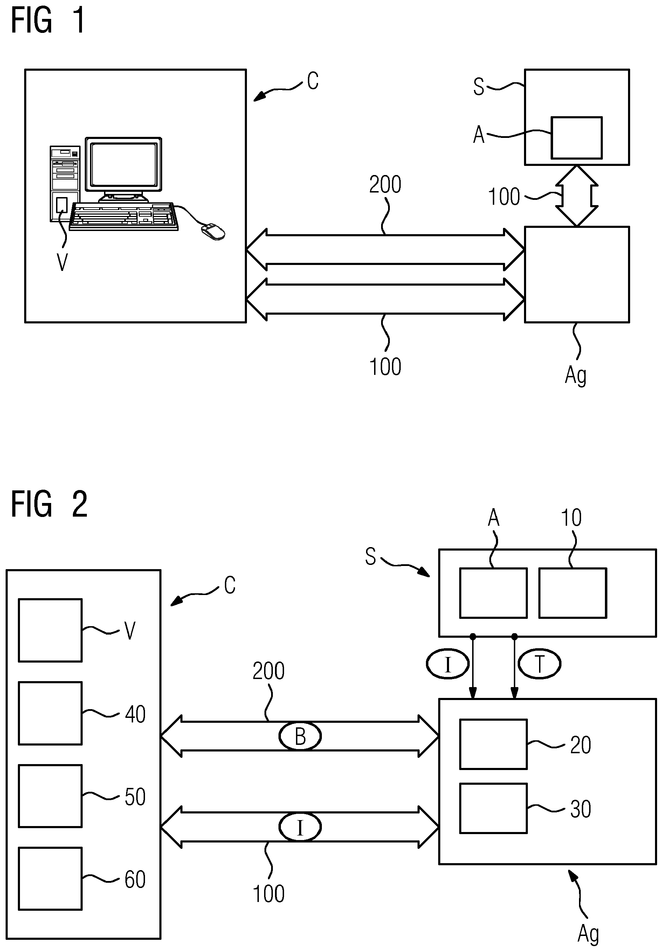

Im Folgenden wird die Erfindung näher unter Bezugnahme auf Figur 1 erläutert. Auf der linken Seite von Figur 1 ist ein Computer C dargestellt, auf dem ein Viewer V implementiert ist. Der Computer kann als Befundungsworkstation ausgebildet sein und einen oder mehrere Monitor(e), eine Tastatur, eine Maus und einen Computer umfassen. Alternativ kann hier auch ein Computernetzwerk oder nur eine Darstellungseinrichtung (Monitor) mit einem UI-Interface (z.B. Maus und/oder Tastatur) vorgesehen sein. Der Viewer V wird von einer entfernten Applikation A gesteuert, die auf einem Server S installiert ist, der in Figur 1 auf der rechten Seite dargestellt ist. Der Server S interagiert nicht direkt mit dem Viewer V bzw. mit dem Computer C, sondern über einen Agenten Ag. Dabei steht der Agent Ag in Datenaustausch mit dem Server S über eine RVIC-Verbindung 100. Darüber hinaus steht der Agent Ag in Datenaustausch mit dem Viewer V über zwei Verbindungen:
- Eine RDP-Verbindung 200 und
- Die RVIC-Verbindung 100. Dabei kann es sich um zwei physikalisch getrennte Datenübertragungswege handeln oder um einen gemeinsamen Kanal, der in zwei logisch getrennte Kanäle aufgespalten ist.

Wie in Figur 2 schematisch dargestellt umfasst ein Client-Serversystem mit dem Server S neben der Applikation A einen Bildgenerator 10. Der Bildgenerator 10 dient zum Erzeugen einer Bildfolge, die an den Viewer V zur Darstellung übertragen werden soll. Darüber hinaus generiert der Bildgenerator 10 einen üblicherweise einzelne Bilder der Bildfolge identifizierenden Identifikator I und/oder einen Übertragungsindikator T. In alternativen Ausführungsformen sind die beiden Datensätze Identifikator I und Übertragungsindikator T zu einem Datensatz kombiniert.

Der Agent Ag umfasst ein Übertragungsmodul 20 und ein Versendemodul 30. Das Übertragungsmodul 20 dient zur Analyse des empfangenen Übertragungsindikators T, um in Abhängigkeit von dem Übertragungsindikator T eine modifizierte Bildfolge aus der empfangenen (originalen) Bildfolge zu erzeugen. Die modifizierte Bildfolge ist an die verfügbare Netzwerkauslastung angepasst und berücksichtigt, welche Daten des Bildes in hoher Qualität und damit verlustfrei übertragen werden müssen und welche Dateninhalte von geringerer Relevanz sind und damit auch verlustbehaftet übertragen werden können. Dies wird durch den Übertragungsindikator T gekennzeichnet, der daraufhin eine modifizierte Bildfolge erzeugt und diese an das Versendemodul 30 weitergibt. Das Versendemodul dient dann zum Versenden der modifizierten Bildfolge mit dem Identifikator I über die RDP-Verbindung 200. Darüber hinaus dient das Versendemodul 30 zum Versenden des Identifikators I als Referenz-Identifikator über die RVIC-Verbindung 100 an den Viewer V.

Gemäß einer bevorzugten Ausführungsform der Erfindung kann der Übertragungsindikator dynamisch und insbesondere in Abhängigkeit von der aktuellen Netzwerkauslastung und der verfügbaren Bandbreit für die Datenübertragung (insbesondere der RDP-Verbindung 200) bestimmt werden, die dann in einem Vorbereitungsschritt automatisch erfasst und dem Bildgenerator 10 weitergeleitet wird.

Der Computer C umfasst neben dem dort installierten Viewer V ein Empfangsmodul 40, und einen Komparator 50. Das Empfangsmodul 40 dient zum Empfang der modifizierten Bildfolge mit dem Identifikator I und zum Empfang des Referenz-Identifikators über den getrennten RVIC-Kanal 100.

Der Komparator 50 dient zum Vergleich des Identifikators I mit dem Referenz-Identifikator auf Übereinstimmung. Im Falle einer Übereinstimmung kann eine fehlerfreie und von der Applikation A geforderte Datenübertragung des Bildschirminhaltes validiert werden. Dies kann in Form eines Bestätigungssignales B signalisiert werden, das über die RDP-Verbindung 200 an den Agenten Ag übertragen wird und von dem Agenten Ag an die Applikation A rück-übermittelt wird, um dieser zu signalisieren, dass das Bild bzw. die Bildfolge fehlerfrei auf dem Viewer V empfangen und dargestellt werden konnte. Üblicherweise ist ein Userinterface 60 auf dem Computer C installiert, über die der Anwender Benutzereingaben tätigen kann, beispielsweise über Maus- und/oder Tastaturbedienung. Diese Signale werden dann, vorzugsweise über die RDP-Verbindung 200 an den Agenten Ag weitergeleitet, der diese Signale an die Applikation A weitergibt. Die Applikation A empfängt die Benutzersignale und veranlasst daraufhin das Erzeugen einer neuen Bildfolge bzw. eines neuen Bildes einer Bildfolge, das wiederum mit dem oben beschriebenen Verfahren an den Viewer V übertragen wird.

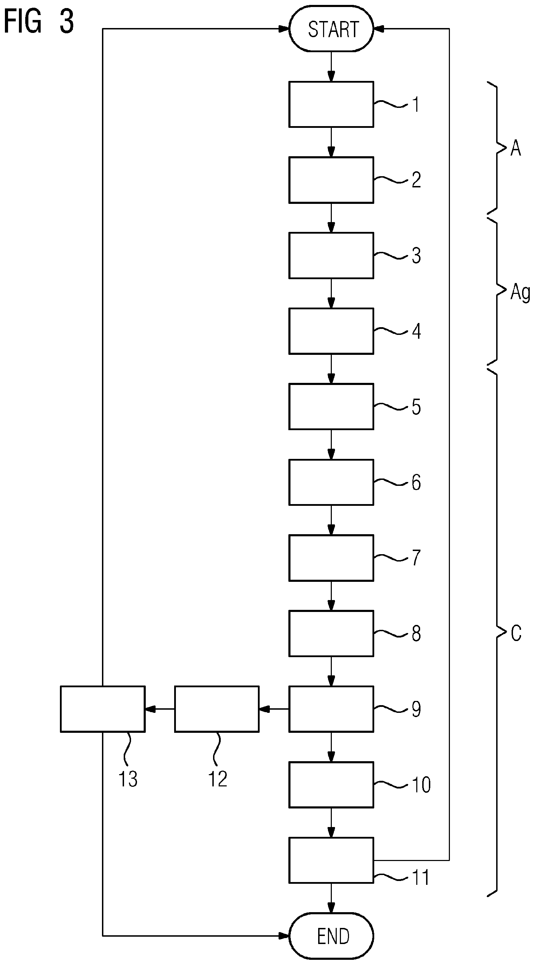

Im Folgenden wird unter Bezugnahme auf Figur 3 ein typischer Ablauf gemäß einer bevorzugten Ausführungsform näher erläutert.

Nach dem Start des Verfahrens erfolgt in **Schritt 1** das Erzeugen der Bildfolge, das Erzeugen des, der Bildfolge zugeordneten Identifikators I und/oder des Übertragungsindikators T. In **Schritt 2** wird durch die Applikation A ein Versenden der Bildfolge, des Identifikators I und/oder des Übertragungsindikators T ausgelöst.

In **Schritt 3** wird das Datenpaket auf dem Agenten Ag empfangen, um den Übertragungsindikator T zu analysieren, der indiziert, wie die Bildfolge komprimiert und/oder übertragen werden soll. Daraufhin kann der Agent Ag eine modifizierte Bildfolge erzeugen und sie zur Versendung an den Viewer V vorbereiten.

In **Schritt 4** erfolgt das Versenden der modifizierten Bildfolge mit dem Identifikator I über die RDP-Verbindung 200 an den Viewer V.

In **Schritt 5** erfolgt das Versenden des Identifikator I als Referenz-Identifikator über den RVIC-Kanal 100 an den Viewer V.

In **Schritt 6** wird die modifizierte Bildfolge und der Identifikator I über die RDP-Verbindung 200 auf dem Viewer V empfangen.

In **Schritt 7** wird der Referenz-Identifikator über den RVIC-Kanal 100 auf dem Viewer V empfangen.

In **Schritt 8** erfolgt der Vergleich des Identifikators I mit dem Referenz-Identifikator auf Übereinstimmung.

In **Schritt 9** wird der Bildschirminhalt bzw. die modifizierte Bildfolge durch den Viewer V auf dem Computer C dargestellt. Nun kann bedarfsweise ein Bestätigungssignal B erzeugt werden, das kennzeichnet, dass die Bildfolge in der ausreichenden Qualität auf dem Viewer V dargestellt werden konnte. Dies erfolgt in **Schritt 12.**

In **Schritt 13** kann dann das Bestätigungssignal B über die RVIC-Verbindung 100 an den Agenten Ag und anschließend an die Applikation A weitergeleitet werden. Daraufhin kann das Verfahren wieder eine neue Bildfolge generieren und erneut starten oder zu **Schritt 1** verweisen.

Alternativ kann nach **Schritt 9** auch **Schritt 10** ausgeführt werden, bei dem Nutzersignale über die Schnittstelle 60 erfasst werden.

**Schritt 11** dient dann zur Übermittlung der Nutzereingaben zur Veränderung der dargestellten Bildschirminhalte über die RDP-Verbindung 200 an den Agenten Ag. Danach kann das Verfahren entweder enden oder iterativ angewendet werden.

Wie in Figur 3 durch die geschweiften Klammern angedeutet, werden die Schritte 1 und 2 gemäß einer bevorzugten Ausführungsform der Erfindung auf dem Server S, die Schritte 3 bis 5 auf dem Agenten Ag und die restliche Schritte 6 bis 11 auf dem Viewer V ausgeführt.

Das Verfahren läuft bevorzugt vollautomatisch ab, das heißt ohne jegliche Benutzerinteraktion eines Anwenders. Das Verfahren kann teilweise oder vollständig software-basiert sein. Darüber hinaus ist es möglich, das Verfahren bzw. System als embedded system in den Computer und/oder in den Server oder die medizintechnische Anlage und/oder in einen Steuerrechner (z.B. im Rahmen eines zentralen Servers) einzubetten bzw. zu integrieren. Das Verfahren dient der Speicherung, Verarbeitung und Weiterleitung von aufbereiteten Daten (in Form von Identifikatoren, Übertragungsindikatoren und Bestätigungssignal) anhand computer-basierter technischer Geräte (Netzwerk) an andere Instanzen. Die Eingangsgrößen zur Berechnung und/oder zum Datentransfer (die Netzwerkverbindungen, Protokolle) werden erfindungsgemäß abweichend erzeugt und sind abhängig von den aktuell verfügbaren Netzwerkparametern (u.a. des remote desktop protocols). Damit berücksichtigt das Verfahren auch die Gegebenheiten der Datenverarbeitungsanlage, indem für den Datentransfer auf die technischen Netzwerkkenngrößen abgestellt wird.

Das Verfahren ist in der Regel computerimplementiert. Dabei kann es sein, dass bestimmte Verfahrensabschnitte als Teil einer Mikroprozessorlösung und somit fest verdrahtet sind, während andere Abschnitte des Verfahrens als Software ausgebildet sind. In diesem Fall wären nur einzelne Abschnitte oder Teile des Verfahrens softwareimplementiert. In der Regel sind alle oder ausgewählte Abschnitte des Verfahrens binär codiert oder sie liegen in digitaler Form vor. Dabei können alle oder einzelne Abschnitte des Verfahrens als Quellcode (Source Code), als bereits fertig kompilierter Code (Maschinencode) oder als interpretierter Code (z.B. in den Interpretersprachen Python, PHP, Ruby) bereitgestellt werden oder mittels eines Interpreters (z.B. Jit-Compilers) interpretiert werden. Für die Durchführung des erfindungsgemäßen Verfahrens und der weiter beanspruchten Produkte ist es unerheblich, in welcher Programmiersprache (z.B. C++, Java, Perl oder PHP etc.) die Software vorliegt. Wesentlich ist, dass die Software als Teil eines technischen Systems in das technische Gerät unmittelbar eingebunden ist und dort zur Steuerung eines remote desktop viewers dient. Die Teile des erfindungsgemäßen Verfahrens, die als Software implementiert sind, können Teil eines sogenannten "embedded systems" sein, das in das umgebende medizintechnische System eingebettet ist und mit diesem in Wechselwirkung steht.

Abschließend sei darauf hingewiesen, dass einzelne Module auch als Software und/oder Hardwaremodule implementiert sein können und die Ausführungsbeispiele grundsätzlich nicht einschränkend in Hinblick auf eine bestimmte physikalische Realisierung der Erfindung zu verstehen sind. Für einen einschlägigen Fachmann ist es insbesondere offensichtlich, dass die Erfindung teilweise oder vollständig in Soft- und/oder Hardware und/oder auf mehrere physikalische Produkte - dabei insbesondere auch Computerprogrammprodukte - verteilt realisiert werden kann.

## Patentansprüche

1. Verfahren zur entfernten Steuerung eines Viewers (V), der zur Darstellung von zumindest einer medizinischen Bildfolge dient, wobei der Viewer (V) durch eine Applikation (A) gesteuert wird, die auf einem entfernten Server (S) implementiert ist, wobei der Viewer (V) und Server (S) über eine RDP-Netzwerkverbindung (200) mittelbar in Datenaustausch stehen, indem der Datenaustausch zwischen Viewer (V) und der Applikation (A) über einen Agenten (Ag) vermittelt wird, wobei der Agent (Ag) über die RDP-Netzwerkverbindung (200) und zusätzlich über einen separaten Datenkanal (100) mit einem Computer (C) in Datenaustausch steht und wobei der Agent (Ag) über den Separaten Daten Kanal (100) mit dem Server (S) in Datenaustausch steht, umfassend folgende Verfahrensschritte:
- Seitens der Applikation (A): Erzeugen einer Bildfolge zur Darstellung auf dem Viewer (V), eines Identifikators (I) und eines Übertragungsindikators (T) und Versenden der Bildfolge mit dem Identifikator (I) und dem Übertragungsindikator (T) an den Agenten (Ag)
- Seitens des Agenten (Ag): Analyse des empfangenen Übertragungsindikators (T) zum Erzeugen einer modifizierten Bildfolge in Abhängigkeit von dem Übertragungsindikator (T)
- Versenden der modifizierten Bildfolge mit dem Identifikator (I) von dem Agenten (Ag) an den Viewer (V) über die RDP-Netzwerkverbindung (200)
- Versenden des Identifikators (I) als Referenz-Identifikator über den separaten Datenkanal (100) an den Viewer (V)
- Seitens des Computers (C): Empfang der modifizierten Bildfolge mit dem Identifikator (I) und des Referenz-Identifikators und Vergleich des Identifikators (I) mit dem Referenz-Identifikator auf Übereinstimmung
- Darstellen der Bildfolge auf dem Viewer (V).

2. Verfahren nach Anspruch 1, wobei der separate Datenkanal (100) ein RVIC-Kanal ist.

3. Verfahren nach Anspruch 1 oder 2, wobei auf dem Viewer (V) eine Nutzerschnittstelle (60) installiert ist, um Nutzereingaben zu erfassen, die mittels der RDP-Netzwerkverbindung (200) über den Agenten (Ag) an die Applikation (A) übertragen werden, um bedarfsweise eine neue oder geänderte Bildfolge zu generieren.

4. Verfahren nach einem der vorstehenden Ansprüche, bei dem der Übertragungsindikator (T) für jeweils ein Bild der Bildfolge, mehreren Bildern der Bildfolge oder einem Bildausschnitt zugeordnet ist.

5. Verfahren nach einem der vorstehenden Ansprüche, bei dem der Übertragungsindikator (T) kennzeichnet, welche Kompressionseinstellungen und/oder Qualitätsvorgaben bei der Übertragung der Bildfolge an den Viewer (V) anzuwenden sind und insbesondere, ob eine verlustbehaftete oder verlustfreie Kompression anzuwenden ist.

6. Verfahren nach einem der vorstehenden Ansprüche, bei dem der Übertragungsindikator (T) dynamisch in Abhängigkeit von einer verfügbaren Bandbreite und/oder Netzwerkauslastung des Netzwerkes bestimmt wird.

7. Verfahren nach einem der vorstehenden Ansprüche, bei dem der Identifikator (I) die Bildfolge als Ganzes identifiziert und/oder jeweils einzelne Bilder der Bildfolge und dabei eine Folge von Identifikatoren umfasst.

8. Verfahren nach einem der vorstehenden Ansprüche, bei dem seitens des Viewers (V) überprüft wird, ob die Bildfolge auf dem Viewer (V) vollständig, in der von der Applikation geforderten Qualität und/oder in der vorgesehenen Abfolge empfangen und darstellbar ist, indem eine Folge von Identifikatoren (I) wie sie auf dem Viewer (V) empfangen wird mit einer Folge von Referenz-Identifikatoren wie sie von der Applikation (A) erzeugt wurde auf Übereinstimmung verglichen wird, um bei Übereinstimmung ein Bestätigungssignal (B) zu erzeugen.

9. Verfahren nach Anspruch 8 , bei dem das Bestätigungssignal (B) von dem Viewer (V) über den separaten Datenkanal (100) an die Applikation (A) übertragen wird.

10. Verfahren nach Anspruch 8 oder 9 , bei dem das Bestätigungssignal (B) einen Frame-Drop-Datensatz umfasst, aus dem zumindest eine Frame-Drop-Rate berechnet wird.

11. Verfahren nach einem der vorstehenden Ansprüche, bei dem die Nutzereingaben und/oder die Bildfolge und/oder der Identifikator (I) einen Zeitstempel umfassen.

12. Verfahren nach einem der vorstehenden Ansprüche, bei dem automatisch erkannt wird, falls bei der Übertragung der Bildfolge von dem Server (S) an den Viewer (V) ein Fehler aufgetreten ist.

13. Verfahren nach einem der vorstehenden Ansprüche, bei dem automatisch ein Warnsignal generiert und möglicherweise an andere Computer-basierte Instanzen weitergeleitet wird, falls die Bildfolge auf dem Viewer (V) nicht empfangen worden ist, wie es von der Applikation (A) mittels der Bestimmung des Übertragungsindikators (T) gefordert wurde.

14. Client-Server-basiertes Remote-Viewer-System, mit:
- Einem Viewer (V), der zur Darstellung von zumindest einer medizinischen Bildfolge bestimmt ist,
- Einem Server (S), auf dem eine Applikation (A) implementiert ist, die zur entfernten Steuerung des Viewers (V) dient,
- Einem Agenten (Ag), der in einer Umgebung des Servers (S) implementiert ist und der als Mittler für den Datenaustausch zwischen Applikation (A) und Viewer (V) dient
- Einer RDP-Netzwerkverbindung (200) über die der Viewer (V) und der Agent (Ag) in Datenaustausch stehen,
- Einem separaten Datenkanal (100) über die der Viewer (V) und der Agent (Ag) in Datenaustausch stehen und der auch zwischen Applikation (A) und Agent (Ag) ausgebildet ist
- Einem Bildgenerator (10), der auf dem Server (S) ausgebildet ist und bestimmt ist zum: Erzeugen einer Bildfolge zur Darstellung auf dem Viewer (V), eines Identifikators (I) und eines Übertragungsindikators (T) und zum Versenden der Bildfolge mit dem Identifikator (I) und dem Übertragungsindikator (T) an den Agenten (Ag)
- Einem Übertragungsmodul (20), das auf dem Agenten (Ag) installiert ist und zur Analyse des empfangenen Übertragungsindikators (T) zum Erzeugen einer modifizierten Bildfolge in Abhängigkeit von dem Übertragungsindikator (T) bestimmt ist
- Einem Versendemodul (30), das auf dem Agenten (Ag) installiert ist und zum Versenden der modifizierten Bildfolge mit dem Identifikator (I) an den Viewer (V) über die RDP-Netzwerkverbindung (200) bestimmt ist und das weiterhin zum Versenden des Identifikators (I) als Referenz-Identifikator über den separaten Datenkanal (100) an den Viewer (V) bestimmt ist
- Einem Empfangsmodul (40), das auf dem Viewer (V) installiert ist und zum Empfang der modifizierten Bildfolge mit dem Identifikator (I) und zum Empfang des Referenz-Identifikators bestimmt ist und das einen Komparator (50) umfasst, der zum Vergleich des Identifikators (I) mit dem Referenz-Identifikator auf Übereinstimmung bestimmt ist.

15. Computerprogrammprodukt mit einem Computerprogramm, das direkt in einen internen Speicher eines digitalen Computers (C, S, Ag) geladen werden kann und Softwarecodeabschnitte umfasst, mit denen die Schritte gemäß den vorstehenden Verfahrensansprüchen ausgeführt werden, wenn das Computerprogramm auf dem Computer (C, S, Ag) läuft.

## Claims

1. Method for the remote control of a viewer (V), which is used to display at least one sequence of medical images, wherein the viewer (V) is controlled by an application (A) implemented on a remote server (S), wherein the viewer (V) and server (S) exchange data indirectly via an RDP network connection (200) in that the data exchange between the viewer (V) and the application (A) is mediated via an agent (Ag), wherein the agent (Ag) exchanges data with a computer (C) via the RDP network connection (200) and also via a separate data channel (100) and wherein the agent (Ag) exchanges data with the server (S) via the separate data channel (100), comprising the following method steps:
- on the part of the application (A): generation of a sequence of images to be displayed on the viewer (V), of an identifier (I) and of a transmission indicator (T) and sending the sequence of images with the identifier (I) and the transmission indicator (T) to the agent (Ag)
- on the part of the agent (Ag): analysis of the received transmission indicator (T) for the generation of a modified sequence of images in dependence on the transmission indicator (T)
- sending the modified sequence of images with the identifier (I) from the agent (Ag) to the viewer (V) via the RDP network connection (200)
- sending the identifier (I) to the viewer (V) as a reference identifier via the separate data channel (100)
- on the part of the computer (C): receiving the modified sequence of images with the identifier (I) and the reference identifier and comparing the identifier (I) with the reference identifier for conformity
- displaying the sequence of images on the viewer (V).

2. Method according to claim 1, wherein the separate data channel (100) is an RVIC channel.

3. Method according to claim 1 or 2, wherein a user interface (60) is installed on the viewer (V) in order to acquire user inputs, which are transmitted by means of the RDP network connection (200) via the agent (Ag) to the application (A) in order to generate a new or changed sequence of images if required.

4. Method according to one of the preceding claims, with which each transmission indicator (T) for an image in the sequence of images is assigned to a plurality of images in the sequence of images or a section of an image.

5. Method according to one of the preceding claims, with which the transmission indicator (T) indicates which compression settings and/or quality specifications are to be used for the transmission of the sequence of images to the viewer (V) and in particular whether lossy or lossless compression is to be used.

6. Method according to one of the preceding claims, with which the transmission indicator (T) is determined dynamically in dependence on an available bandwidth and/or network utilisation of the network.

7. Method according to one of the preceding claims, with which the identifier (I) identifies the sequence of images as a whole and/or each individual image in the sequence of images and hence comprises a sequence of identifiers.

8. Method according to one of the preceding claims, with which the viewer (V) checks whether the sequence of images on the viewer (V) is received and can be displayed completely, in the quality required by the application and/or in the envisaged sequence in that a sequence of identifiers (I) as received on the viewer (V) is compared with a sequence of reference identifiers as generated by the application (A) for conformity in order to generate a confirmation signal (B) in the event of conformity.

9. Method according to claim 8, with which the confirmation signal (B) is transmitted from the viewer (V) via the separate data channel (100) to the application (A).

10. Method according to claim 8 or 9, with which the confirmation signal (B) comprises a frame-drop data record from which at least one frame-drop rate is calculated.

11. Method according to one of the preceding claims, with which the user input and/or the sequence of images and/or the identifier (I) comprise a time stamp.

12. Method according to one of the preceding claims, with which the occurrence of an error on the transmission of the sequence of images from the server (S) to the viewer (V) is automatically recognised.

13. Method according to one of the preceding claims, with which a warning signal is automatically generated and possibly forwarded to other computer-based instances if the sequence of images on the viewer (V) was not received as required by the application (A) by means of the determination of the transmission indicator (T).

14. Client-server-based remote-viewer system, with:
- a viewer (V), which is intended to display at least one sequence of medical images,
- a server (S), on which an application (A) is implemented which is used for the remote control of the viewer (V),
- an agent (Ag), which is implemented in an environment of the server (S) and which serves as mediator for the data exchange between the application (A) and the viewer (V)
- an RDP network connection (200) via which the viewer (V) and the agent (Ag) exchange data,
- a separate data channel (100) via which the viewer (V) and the agent (Ag) exchange data and which is also embodied between the application (A) and the agent (Ag)
- an image generator (10), which is embodied on the server (S) and intended: to generate a sequence of images to be displayed on the viewer (V), an identifier (I) and a transmission indicator (T) and to send the sequence of images with the identifier (I) and the transmission indicator (T) to the agent (Ag)
- a transmission module (20), which is installed on the agent (Ag) and intended to be used for the analysis of the received transmission indicator (T) for the generation of a modified sequence of images in dependence on the transmission indicator (T)
- a sending module (30), which is installed on the agent (Ag) and intended to be used to send the modified sequence of images with the identifier (I) to the viewer (V) via the RDP network connection (200) and which is also intended to be used to send the identifier (I) via the separate data channel (100) to the viewer (V) as a reference identifier
- a receiving module (40), which is installed on the viewer (V) and intended to be used to receive the modified sequence of images with the identifier (I) and to receive the reference identifier and which comprises a comparator (50), which is intended to be used to compare the identifier (I) with the reference identifier for conformity.

15. A computer program product with a computer program, which can be loaded directly into an internal memory of a digital computer (C, S, Ag) and comprises software code segments with which the steps according to the preceding method claims are executed when the computer program runs on the computer (C, S, Ag).

## Revendications

1. Procédé de commande à distance d'une visionneuse (V), qui sert à représenter au moins une séquence d'images médicales, dans lequel on commande la visionneuse (V) par une application mise en oeuvre sur un serveur (S) à distance, la visionneuse (V) et le serveur (S) étant en échange de données indirectement par une liaison (200) de réseau RDP , par le fait que l'échange de données entre la visionneuse (V) et l'application (A) s'effectue par l'intermédiaire d'un agent (Ag), l'agent (Ag) étant en échange de données avec un ordinateur (C) par l'intermédiaire de la liaison (200) de réseau RDP et, supplémentairement, par un canal (100) de données distinct et l'agent (Ag) étant en échange de données avec le serveur (S) par le canal (100) de données distinct, comprenant les stades de procédé suivants :
- de la part de l'application (A) : production d'une séquence d'images à représenter sur la visionneuse (V), d'un identificateur (I) et d'un indicateur (T) de transmission, et envoi de la séquence d'images, avec l'identificateur (I) et l'indicateur (T) de transmission, à l'agent (Ag),
- de la part de l'agent (Ag) : analyse de l'indicateur (T) de transmission reçu, pour produire une séquence d'images modifiée en fonction de l'indicateur (T) de transmission,
- envoi de la séquence d'images modifiée avec l'identificateur (I), de l'agent (Ag) à la visionneuse (V), par la liaison (200) de réseau RDP,
- envoi de l'identificateur (I) comme identificateur de référence à la visionneuse (V) par le canal (100) de données distinct,
- de la part de l'ordinateur (C) : réception de la séquence d'images modifiée avec l'identificateur (I) et l'identificateur de référence et comparaison de l'identificateur (I) à l'identificateur de référence, pour savoir s'il y a coïncidence,
- représentation de la séquence d'images sur la visionneuse (V).

2. Procédé suivant la revendication 1, dans lequel le canal (100) de données distinct est un canal RVIC.

3. Procédé suivant la revendication 1 ou 2, dans lequel une interface (60) utilisateur est installée sur la visionneuse (V) pour détecter des entrées d'utilisateur, qui sont transmises à l'application (A) par l'agent (Ag) au moyen de la liaison (200) de réseau RDP, afin de produire, suivant les besoins, une séquence d'images nouvelle ou modifiée.

4. Procédé suivant l'une des revendications précédentes, dans lequel l'indicateur (T) de transmission est affecté à respectivement une image de la séquence d'images, à plusieurs images de la séquence d'images ou à un segment d'images.

5. Procédé suivant l'une des revendications précédentes, dans lequel l'indicateur (T) de transmission caractérise des réglages de compression et/ou des prescriptions de qualité à appliquer à la transmission de la séquence d'images à la visionneuse (V) et notamment s'il faut appliquer une compression ayant des pertes ou sans perte.

6. Procédé suivant l'une des revendications précédentes, dans lequel on détermine l'indicateur (T) de transmission d'une manière dynamique, en fonction d'une largeur de bande disponible et/ou d'une utilisation du réseau.

7. Procédé suivant l'une des revendications précédentes, dans lequel l'identificateur (I) identifie la séquence d'images dans son ensemble et/ou des images individuelles de la séquence d'images et comprend alors une succession d'identificateurs.

8. Procédé suivant l'une des revendications précédentes, dans lequel on contrôle de la part de la visionneuse (V) si la succession d'images est reçue sur la visionneuse (V) en la qualité exigée par l'application et/ou en la succession prévue et peut être présentée, en comparant pour coïncidence une succession d'identificateurs (I) tels qu'ils sont reçus sur la visionneuse (V) à une succession d'identificateurs de référence tels qu'ils ont été produits par l'application (A) afin, s'il y a coïncidence, de produire un signal (B) de confirmation.

9. Procédé suivant la revendication 8, dans lequel on transmet le signal (B) de confirmation, de la visionneuse (V) à l'application (A), par le canal (100) de données distinct.

10. Procédé suivant la revendication 8 ou 9, dans lequel le signal (B) de confirmation comprend un jeu de données frame-drop, dont on calcule au moins un frame-drop-rate.

11. Procédé suivant l'une des revendications précédentes, dans lequel les entrées d'utilisateur et/ou la séquence d'images et/ou l'identificateur (I) comprend un horodatage.

12. Procédé suivant l'une des revendications précédentes, dans lequel on détecte automatiquement s'il se produit une erreur à la transmission de la séquence d'images du serveur (S) à la visionneuse (V).

13. Procédé suivant l'une des revendications précédentes, dans lequel on produit automatiquement un signal d'alerte et on l'achemine, le cas échéant, vers d'autres instances informatiques, si la séquence d'images n'a pas été reçue sur la visionneuse (V), comme cela a été exigé par l'application (A) au moyen de la détermination de l'indicateur (T) de transmission.

14. Système de visionneur à distance reposant sur un serveur client, comprenant :
- une visionneuse (V) qui est destinée à la représentation d'au moins une séquence d'images médicales,
- un serveur (S), sur lequel est mis en oeuvre une application (A) qui sert à la commande à distance de la visionneuse (V),
- un agent (AG), qui est mis en oeuvre dans un environnement du serveur (S) et qui sert d'intermédiaire pour l'échange de données entre l'application (A) et la visionneuse (V)
- une liaison (200) de réseau RDP, par laquelle la visionneuse (V) et l'agent (Ag) sont en échange de données,
- un canal (100) de données distinct, par lequel la visionneuse (V) et l'agent (Ag) sont en échange de données et qui est constitué aussi entre l'application (A) et l'agent (Ag),
- un producteur (10) d'images, qui est constitué sur le serveur (S) et qui est destiné à produire une séquence d'images à représenter sur la visionneuse (V), un identificateur (I) et un indicateur (T) de transmission et à envoyer à l'agent (Ag) la séquence d'images avec l'identificateur (I) et l'indicateur (T) de transmission,
- un module (20) de transmission, qui est installé sur l'agent (Ag) et qui est destiné à l'analyse de l'indicateur (T) de transmission reçu, pour produire une séquence d'images modifiée en fonction de l'indicateur (T) de transmission,
- un module (30) d'envoi, qui est installé sur l'agent (Ag) et qui est destiné à envoyer à la visionneuse (V) la séquence d'images modifiée avec l'identificateur (I), par la liaison (200) de réseau RDP, et qui est destiné en outre à envoyer à la visionneuse (V) l'identificateur (I) comme identificateur de référence, par le canal (100) de données distinct,
- un module (40) de réception, qui est installé sur la visionneuse (V) et qui est destiné à la réception de la séquence d'images modifiée avec l'identificateur (I), et à la réception de l'identificateur de référence et qui comprend un comparateur (50) destiné à comparer pour coïncidence l'identificateur (I) à l'identificateur de référence.

15. Produit de programme informatique ayant un programme informatique qui peut être chargé directement dans une mémoire interne d'un ordinateur (C, S, Ag) numérique et qui comprend des parties de code logiciel, par lesquels les stades suivant les revendications de procédé précédentes sont réalisées, lorsque le programme informatique se déroule sur l'ordinateur (C, S, Ag).
